# EUROPEAN PATENT APPLICATION

(11) **EP 1 729 048 A1**
(43) Date of publication of application: **06.12.2006**
(21) Application number: 06018494.2
(22) Date of filing: 04.11.2000
(51) Int. Cl.: F16L 11/10, F16L 11/08

(54) **Flexible pipe and method of manufacturing same**

(30) Priority: 05.11.1999 US 163908 P; 03.11.2000 US 706070
(62) Divisional of application: 00978374.7
(71) Applicant: Wellstream International Limited, Newcastle-upon-Tyne NE6 3PF (GB)
(72) Inventor: Fraser, Dana J, Panama City, FL 32405 (US); Hoefling, Robert G, Panama City, FL 32405 (US); Kalman, Mark D, Katy, TX 77450 (US); Mccone, Alan, San Francisco,CA 94118 (US)
(74) Representative: Boakes, Jason Carrington

(57) **Abstract**

A flexible pipe and a method of manufacturing same according to which the pipe is formed by multiple layers of different materials and suitable for use in subsea and land-based applications.

## Description

The present invention relates to a relative low-cost flexible pipe formed by multiple layers of different materials and suitable for use in subsea and land-based applications.

According to a first aspect of the present invention there is provided a flexible pipe, comprising:
a tubular member defining longitudinal passage;
a continuous metal strip helically wrapped over the tubular member;
a plurality of wires wrapped around the metal strip to form a first tensile layer;
a plurality of wires wrapped around the exterior of the first tensile layer to form a second tensile layer;
the metal strip having a constant thickness and being formed prior to being wrapped around the tubular member to be bent to form a substantially horizontal inner portion extending from an edge of the strip to a bent portion of the strip, and a substantially horizontal outer portion that is spaced radially outwardly from the inner portion, and that is formed integral with said inner portion and extends from the bent portion to a remaining edge of the strip the wrapping of the strip being such that the outer portions of the strip overlap the corresponding inner portions of their adjacent windings, and the inner portions of the strip are overlapped by the corresponding outer portions of their adjacent windings to achieve an interlocking effect.

Preferably the pipe further comprises a layer of tape extending between the second tensile layer and an outer sheath.

Conveniently the pipe further comprises an inner layer extending with the tubular member to provide collapse and radial compression resistance.

Advantageously the inner layer comprises a plurality of helically wrapped metal strips extending within the tubular member.

Preferably the helically wrapped metal strips are corrugated and/or interlocked.

According to a second aspect of the present invention there is provided a flexible pipe, comprising:
a tubular member defining a longitudinal passage;
a continuous metal strip helically wrapped over the tubular member;
a plurality of wires wrapped around the metal strip to form a first tensile layer;
a plurality of wires wrapped around the exterior of the first tensile layer to form a second tensile layer;
at least one of the wires having a substantially circular or substantially rectangular cross section; and
the metal strip having a constant thickness and being formed prior to being wrapped around the tubular member, the cross section of the strip having a convex portion comprising a first bent region extending from an edge of the strip to a bent portion of the strip via a raised substantially horizontal portion of the strip, and a concave portion, comprising a further bent region extending from a remaining edge of the strip to the bent portion of the strip via a substantially horizontal remaining portion of the strip, said convex portion and said concave portion being integrally formed, the convex portions of the strip overlapping the corresponding concave portions of their adjacent windings, and the concave portions of the strip being overlapped by the corresponding convex portion of their adjacent windings to achieve an interlocking effect.

Preferably the flexible pipe further comprises an inner layer extending with the tubular member to provide collapse and radial compression resistance.

Conveniently the inner layer comprises a plurality of helically wrapped metal strips extending within the tubular member.

Advantageously the helically wrapped metal strips are corrugated and/or interlocked.

Preferably the pipe further comprises a layer of tape extending between the second tensile layer and an outer sheath.

According to a third aspect of the present invention there is provided a flexible pipe, comprising:
a tubular member defining a longitudinal passage;
a plurality of wires wrapped around the exterior of the tubular member to form a first tensile layer; and
a plurality of wires wrapped around the exterior of the first tensile layer to form a second tensile layer;
at least one of the wires having a substantially circular cross section.

According to a fourth aspect of the present invention there is provided a method of manufacturing a pipe from coils of wires having a substantially circular cross section, the method comprising unwinding the wires from their respective coils, passing the unwound wires through rollers to flatten each circular cross section to a rectangular cross section as the wires unwind from the coil, and passing the wires from the rollers and wrapping them around a tubular member.

According to a fifth aspect of the present invention there is provided a method of manufacturing a pipe from a coiled sheet, the method comprising unwinding the sheet from the coil, disposing a plurality of spaced cutters in the path of the sheet as it unwinds from the coil to cut the sheet into a plurality of wires each having a substantially rectangular cross section, and wrapping the wires around a tubular member.

According to a sixth aspect of the present invention there is provided a method of manufacturing a pipe, comprising providing a plurality of coiled wires having a circular cross section, uncoiling the wires while passing the uncoiled portions of the wires through at least one roller to form the circular cross section into a substantially rectangular cross section, and wrapping at least a portion of the wires around a tubular member to form a tensile layer.

According to a seventh aspect of the present invention there is provided a method of manufacturing a pipe, comprising providing a sheet of coiled material, characterised by uncoiling the sheet while passing the uncoiled portion of the sheet through a plurality of spaced cutters in the path of the sheet to cut the sheet into a plurality of wires each having a substantially rectangular cross section, and wrapping at least a portion of the wires around the tubular member to form a tensile layer.

### Brief Description of the Drawing

Fig. 1 is a longitudinal sectional view of a flexible pipe according to an embodiment of the present invention.
Fig. 2 is a longitudinal sectional view of a flexible pipe according to another embodiment of the present invention.
Figs. 3A-3C are longitudinal sectional views of alternative embodiments of a layer of the pipes.of the embodiments of Figs. 1 and 2.

### Detailed Description

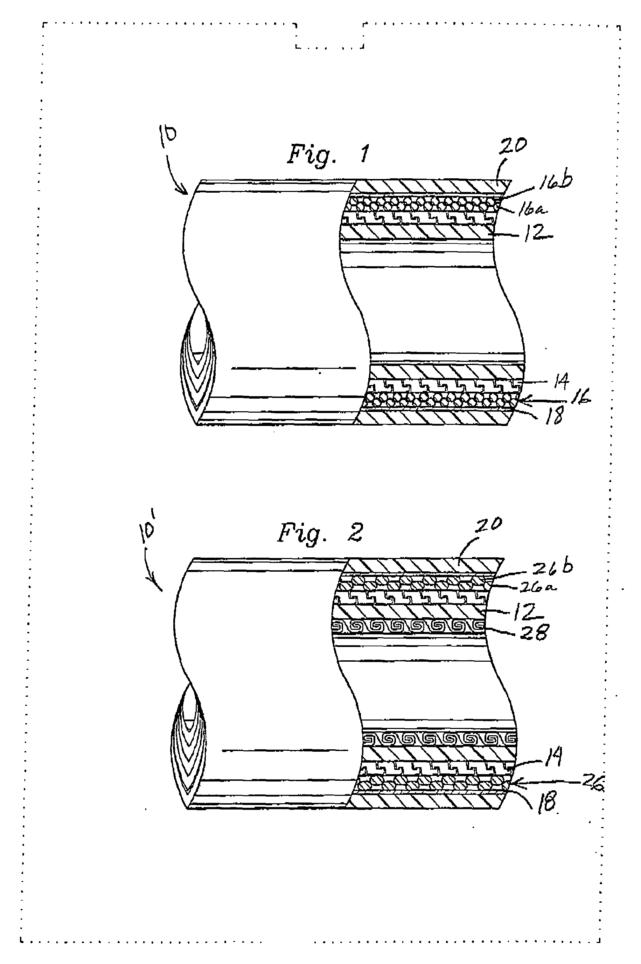

With reference to Fig. 1, a flexible pipe according to an embodiment of the present invention is shown, in general by the reference numeral 10. The pipe 10 is formed by an inner tubular member, preferably in the form of a plastic sheath 12 for conveying fluid through its bore. The sheath may be formed in a conventional manner using polymers, or the like.

A layer 14 is wrapped around the sheath 12 and provides resistance to internal pressure, hydrostatic collapse and crush. The layer 14 is formed by helically wrapping a continuous metal strip, preferably formed of carbon steel, with adjacent windings being interlocked, to form a flexible layer that provides significant hoop and axial strength. The layer 14 is marketed by the assignee of the present invention, Wellstream, Inc., under the "Flexlok" trademark.

A wrapped wire assembly 16 extends over the layer 14 and consists of a series of wires 16a helically wrapped around the exterior of the layer 14 to form a first tensile layer, and an additional series of wires 16b wrapped around the first series of wires 16a to form a second tensile layer extending over the first tensile layer. The wires 16a and 16b have a substantially circular cross section, and are wound at a relatively high lay angle to provide significant hoop strength and axial strength. Preferably, at least a portion of the wires 16a and 16b are formed by carbon steel with an anodic coating, It is noted that the layer 14 prevents the expansion of the sheath 12 into gaps formed between the wires of the tensile layers 16a and 16b.

One or more layers of a tape 18 are helically wrapped over the wire assembly 16. The tape 18 can be formed by plastic or metal and can be reinforced with glass, metal or a stronger plastic. Although not shown in the drawings, it is understood that the tape 18 can also extend between the layer 14 and the wire assembly 16, and between the series of wires 16a and 16b.

A protective outer insulative sheath 20 extends over the tape 18 and is preferably extruded over the tape 18 in a conventional manner, with the tape providing a smooth surface for the extrusion. The sheath 20 is optional and is required only when the tape 18 is inadequate to protect the remaining components of the pipe 10.

Fig. 2 depicts a pipe 10' that is similar to the pipe 10 of Fig. 1 and includes some components of Fig. 1 which are given the same reference numerals. In the embodiment of Fig. 2, a wrapped wire assembly 26 extends over the layer 14 and consists of a series of wires 26a and 26b which are substantially rectangular in cross section. The wires 26a are helically wrapped around the exterior of the layer 14 to form a first tensile layer, and the wires 26b wrapped around the first series of wires 26a to form a second tensile layer extending over the first tensile layer.

According to an embodiment of the method of the invention, the rectangular profile of the wires 26a and 26b is achieved by unwinding the coiled wires from a mandrel, or the like, and passing the wires through opposed rollers which flatten the wires to a substantially rectangular cross section.

According to an alternate method of forming the wires 26a and 26b an elongated sheet is payed out from a coil and a plurality of spaced cutters are placed in the path of the sheet to slit the sheet in to a plurality of wires. The cutters are spaced in a manner to form a plurality of wires having a rectangular cross section.

Both of the above methods avoid the high expense of specialized rolling mills in which coils of round carbon steel wire are processed through repeated roll forming and heat treating operations.

Also, in the embodiment of Fig. 2 it is understood that wrapped tape, identical to the tape layer 18, can also extend between the layer 14 and the wire assembly 26, and between the series of wires 26a and 26b.

Also according to the embodiment of Fig. 2, an inner layer 28 is provided inside the sheath 12. The layer 28 is preferably formed by a plurality of helically wrapped, corrugated and/or interlocked strips to provide additional collapse and radial compression resistance. If the layer 28 is added, the sheath 12 would be extruded over the outer surface of the layer 24.

It is emphasized that both the wire assembly 26 and the layer 28 can be included in the pipe 10 and/or 10', or one can be included without the other.

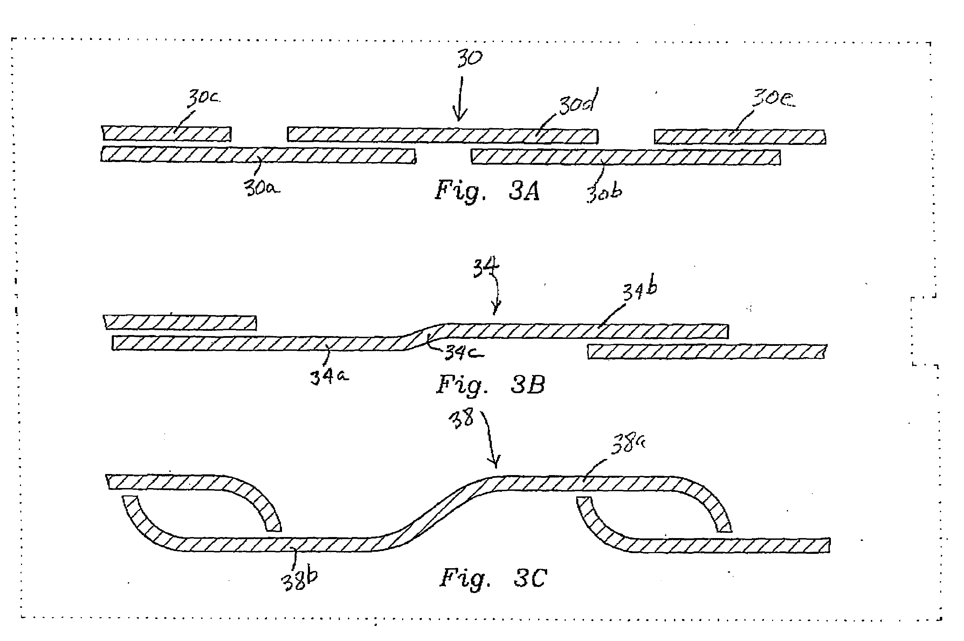

Figs. 3A-3C are alternative embodiments of the layer 14 which can be used with the pipe 10 and/or the pipe 10'. Referring to Fig. 3A, a continuous metal strip 30, preferably of carbon steel, is helically wrapped around the adjacent inner member (not shown). Two adjacent inner windings are shown by the reference numerals 30a and 30b, and three adjacent outer windings are shown by the reference numerals 30c, 30d, and 30e, respectively. The wrapping of the strip 30 is such that the winding 30d overlaps the windings 30a and 30b, the winding 30c overlaps the winding 30a and its adjacent inner winding (not shown), and the winding 30e overlaps the winding 30b and its adjacent inner winding (not shown), and so on. The strip 30 is wound in this manner for the length of the pipes 10 or 10', and it is understood that the number of radially spaced windings, and therefore the thickness of the layer thus formed can vary.

According to the embodiment of Fig. 33, a continuous metal strip 34, preferably of carbon steel, is helically wrapped around the adjacent inner member (not shown). The strip 34 is shaped, or formed, in any known manner to form a cross section having a first substantially horizontal inner portion 34a, and second substantially horizontal portion 34b that is spaced radially outwardly from the inner portion 34a, and a bent portion 34c extending between the portions 34a and 34b. The strip 34 is preferably of carbon steel and is helically wrapped around the adjacent inner member (not shown). The wrapping of the strip 34 is such that the portion 34b overlaps the inner portion of its adjacent winding, and the portion 34a is overlapped by the outer portion of its adjacent winding, to thus achieve an interlocking effect. The strip 34 is wrapped for the length of the pipes 10 or 10', and it is understood that the number of radially spaced windings, and therefore the thickness of the layer thus formed can vary.

According to the embodiment of Fig. 3C, a continuous metal strip 38, preferably of carbon steel, is helically wrapped around the adjacent inner member (not shown). The strip 38 is shaped, or formed, in any known manner to form a cross section having a convex portion 38a extending from a concave portion 38b. The wrapping of the strip 38 is such that the convex portion 38a overlaps the concave portion of its adjacent winding and the concave portion 38a is overlapped by the convex portion of its adjacent winding to thus achieve an interlocking effect. The strip 38 is wrapped for the length of the pipes 10 or 10', and it is understood that the number of radially spaced windings, and therefore the thickness of the layer thus formed can vary.

### Variations

1. In each of the above embodiments, additional tensile layers of wires can be provided in addition to the series of wires 16a and 16b in the pipe 10 and the series of wires 26a and 26b in the pipe 10'.
2. The carbon steel strip layer 14 can be omitted from each of the above embodiments in which case the first tensile layer 16a would be wound directly onto the sheath 12.
3. If the carbon steel strip is omitted, as discussed in paragraph 2, above, an optional wrapped tape, similar to the tape 18 could be provided that extends between the sheath 12 and the first tensile layer 16a.
4. The adjacent windings of the strip forming the layer 14 do not have to be interlocked.
5. In extremely hostile environments, an outer layer similar to the layer 14 can be placed around the sheath 20 for added protection, in each of the embodiments.
6. In extremely hostile environments, an outer layer similar to the layer 14 can be placed around the sheath 20 for added protection.

It is understood that spatial references, such as "under", "over", "between", "outer", "inner" and "surrounding" are for the purpose of illustration only and do not limit the specific orientation or location of the layers described above.

Since other modifications, changes, and substitutions are intended in the foregoing disclosure, it is appropriate that the appended claims be construed broadly and in a manner consistent with the scope of the invention.

## Claims

1. A flexible pipe, comprising:
a tubular member (12) defining longitudinal passage;
a continuous metal strip (34) helically wrapped over the tubular member;
a plurality of wires (16a) wrapped around the metal strip to form a first tensile layer;
a plurality of wires (16b) wrapped around the exterior of the first tensile layer to form a second tensile layer;
the metal strip having a constant thickness and being formed prior to being wrapped around the tubular member to be bent to form a substantially horizontal inner portion (34a) extending from an edge of the strip to a bent portion of the strip, and a substantially horizontal outer portion (34b) that is spaced radially outwardly from the inner portion, and that is formed integral with said inner portion and extends from the bent portion to a remaining edge of the strip the wrapping of the strip being such that the outer portions of the strip overlap the corresponding inner portions of their adjacent windings, and the inner portions of the strip are overlapped by the corresponding outer portions of their adjacent windings to achieve an interlocking effect.

2. The pipe of claim 1 further comprising a layer of tape extending between the second tensile layer and an outer sheath.

3. The pipe of claim 1 or 2 further comprising an inner layer (28) extending with the tubular member (12) to provide collapse and radial compression resistance.

4. The pipe of claim 3 wherein the inner layer (28) comprises a plurality of helically wrapped metal strips extending within the tubular member.

5. The pipe of claim 4 wherein the helically wrapped metal strips are corrugated and/or interlocked.

6. A flexible pipe, comprising:
a tubular member (12) defining a longitudinal passage;
a continuous metal strip (38) helically wrapped over the tubular member;
a plurality of wires (16a) wrapped around the metal strip to form a first tensile layer;
a plurality of wires (16b) wrapped around the exterior of the first tensile layer to form a second tensile layer;
at least one of the wires having a substantially circular or substantially rectangular cross section; and
the metal strip (38) having a constant thickness and being formed prior to being wrapped around the tubular member, the cross section of the strip having a convex portion (38a) comprising a first bent region extending from an edge of the strip to a bent portion of the strip via a raised substantially horizontal portion of the strip, and a concave portion (38b), comprising a further bent region extending from a remaining edge of the strip to the bent portion of the strip via a substantially horizontal remaining portion of the strip, said convex portion and said concave portion being integrally formed, the convex portions of the strip overlapping the corresponding concave portions of their adjacent windings, and the concave portions of the strip being overlapped by the corresponding convex portion of their adjacent windings to achieve an interlocking effect.

7. The pipe of claim 6 further comprising an inner layer (28) extending with the tubular member to provide collapse and radial compression resistance.

8. The pipe of claim 7 wherein the inner layer (28) comprises a plurality of helically wrapped metal strips extending within the tubular member.

9. The pipe of claim 8 wherein the helically wrapped metal strips are corrugated and/or interlocked.

10. The pipe of any one of claims 6 to 9, further comprising a layer of tape extending between the second tensile layer and an outer sheath.

11. A flexible pipe, comprising:
a tubular member defining a longitudinal passage;
a plurality of wires wrapped around the exterior of the tubular member to form a first tensile layer; and
a plurality of wires wrapped around the exterior of the first tensile layer to form a second tensile layer;
at least one of the wires having a substantially circular cross section.

12. The pipe of claim 11 wherein the cross section of the strip has a substantially horizontal inner portion, a substantially horizontal outer portion that is spaced radially outwardly from the first portion, and a bent portion extending between the first and second horizontal portions.

13. The pipe of claim 11 wherein the cross section of the strip has a convex portion extending from a concave portion.

14. The pipe of claim 11 wherein the wrapping of the strip is such that the convex portions overlap the corresponding concave portions of their adjacent winding, and the concave portions are overlapped by the corresponding convex portion of their adjacent windings to achieve an interlocking effect.

15. A method of manufacturing a pipe, comprising providing a plurality of coiled wires having a circular cross section, uncoiling the wires while passing the uncoiled portions of the wires through at least one roller to form the circular cross section into a substantially rectangular cross section, and wrapping at least a portion of the wires around a tubular member to form a tensile layer.

16. A method of manufacturing a pipe, comprising providing a sheet of coiled material, **characterised by** uncoiling the sheet while passing the uncoiled portion of the sheet through a plurality of spaced cutters in the path of the sheet to cut the sheet into a plurality of wires each having a substantially rectangular cross section, and wrapping at least a portion of the wires around the tubular member to form a tensile layer.

17. A method of manufacturing a pipe from coils of wires having a substantially circular cross section, the method comprising unwinding the wires from their respective coils, passing the unwound wires through rollers to flatten each circular cross section to a rectangular cross section as the wires unwind from the coil, and passing the wires from the rollers and wrapping them around a tubular member.

18. A method of manufacturing a pipe from a coiled sheet, the method comprising unwinding the sheet from the coil, disposing a plurality of spaced cutters in the path of the sheet as it unwinds from the coil to cut the sheet into a plurality of wires each having a substantially rectangular cross section, and wrapping the wires around a tubular member.
